# EUROPÄISCHE PATENTANMELDUNG

(11) **EP 3 611 685 A1**
(43) Veröffentlichungstag der Anmeldung: **19.02.2020**
(21) Anmeldenummer: 18189216.7
(22) Anmeldetag: 16.08.2018
(51) Int. Cl.: G06Q 30/04

(54) **FERTIGUNGSVERBUND ZUR FERTIGUNG EINES PRODUKTES UND VERFAHREN ZUR ABRECHNUNG VON DIENSTLEISTUNGEN ZWISCHEN INDUSTRIELLEN FERTIGUNGSMODULEN**

(71) Anmelder: Siemens Aktiengesellschaft, 80333 München (DE)
(72) Erfinder: Fischer, Thomas, 91058 Erlangen (DE); Höme, Stephan, 91126 Schwabach (DE); Jung, Konstantin, 90537 Feucht (DE); Kerschbaum, Sven, 90768 Fürth (DE); Volkmann, Frank, 90475 Nürnberg (DE)

(57) **Zusammenfassung**

Fertigungsverbund zur Fertigung eines Produktes und Verfahren zur Abrechnung von Dienstleistungen zwischen industriellen Fertigungsmodulen

Verfahren zur Abrechnung von Dienstleistungen zwischen industriellen Fertigungsmodulen, wobei in einem ersten Fertigungsmodul (1) durch ein in einem Quell-Datendienst (Q) bereitgestellter Quell-Dienst (QD) von einem in einem zweiten Fertigungsmodul (2) vorhandenen Senke-Datendienst (S) in Anspruch genommen wird, mit den Schritten:
der Quell-Datendienst (Q) macht seinen Quell-Dienst (QD) in einer Gruppe (10) bekannt,
der Senke-Datendienst (S) fragt in der Gruppe (10) den Quell-Dienst (QD) an,
wobei
- der Quell-Dienst (QD) um ein Datenelement (21) erweitert wird, welches den zu zahlenden Betrag für die Inanspruchnahme des Quell-Dienstes (QD) repräsentiert, wobei das Datenelement (20) in der Gruppe (10) von dem Senke-Datendienst (S) sichtbar ist,
- der Quell-Dienst (QD) mit einem Schlüssel (30) verschlüsselt wird,
- der Schlüssel (30) durch einen Schlüsselserver (SKS) verwaltet wird,
- bei Anforderung des Schlüssels (30) von dem Schlüsselserver (SKS) durch den Senke-Datendienst (S), der Senke-Datendienst (S) den zu zahlenden Betrag für den Quell-Dienst (QD) akzeptiert,
- durch die Akzeptierung des zu zahlenden Betrages eine Information (I) generiert wird, welche zur Abrechnung an ein Abrechnungssystem (40) weitergeleitet wird.

## Beschreibung

Die Erfindung betrifft ein Verfahren zur Abrechnung von Dienstleistungen zwischen industriellen Fertigungsmodulen, wobei in einem ersten Fertigungsmodul durch ein in einem Quell-Datendienst bereitgestellter Quell-Dienst von einem in einem zweiten Fertigungsmodul vorhandenen Senke-Datendienst in Anspruch genommen wird, dabei macht der Quell-Datendienst seinen Quell-Dienst in einer Gruppe bekannt und der Senke-Datendienst fragt in der Gruppe den Quell-Dienst an.

Des Weiteren betrifft die Erfindung einen Fertigungsverbund zur Fertigung eines Produktes mit einem ersten Fertigungsmodul und einem zweiten Fertigungsmodul, wobei im ersten Fertigungsmodul ein Quell-Datendienst implementiert ist und dieser einen Quell-Dienst bereitstellt, welcher von einem in dem zweiten Fertigungsmodul implementierten Senke-Datendienst in Anspruch genommen wird, dabei ist der Quell-Datendienst ausgestaltet seinen Quell-Dienst in einer Gruppe bekannt zu machen und der Senke-Datendienst ist ausgestaltet den in der Gruppe angebotenen Quell-Dienst zu nutzen.

Aus der DE 10 2008 045 704 B4 ist ein Verfahren zum Übermitteln von Mediadateien über Mobilfunk von einem Anbietersystem zu einem mobilen Kommunikationsendgerät bekannt. Gibt das mobile Endgerät eine positive Wiedergabebestätigung so wird ein Zählwert auf einem Guthabenkonto des Kunden des Mobilfunkanbieters erhöht.

Ein Grundgedanke von Industrie 4.0 ist eine Kooperation und Kollaboration technischer Gegenstände, die deren virtuelle Repräsentation und Vernetzung zwingend voraussetzt. D.h. ein zentrales Element von Industrie 4.0 ist die Eigenschaft, dass Fertigungsmaschinen die Produktion selbstständig koordinieren und steuern können. Dies erfordert, dass Maschinen selbstständig kommunizieren und in Abhängigkeit vom zu produzierenden Gegenstand unterschiedliche Fertigungsprozesse mit für den Gegenstand angepassten Fertigungsparameter benötigen. Die Fertigungsmaschinen müssen somit in der Lage sein, sich an die aktuellen Gegebenheiten anzupassen und miteinander kommunizieren zu können, um die für den zu produzierenden Gegenstand relevante Anlagenkonfiguration einrichten zu können.

Eine Basis hierfür bildet eine Maschinen zu Maschinen (M2M)-Kommunikation. Ein, insbesondere im Kontext der Industrie 4.0, häufig anzutreffendes und in der Industrie weit verbreitetes M2M-Protokoll ist OPC UA. Neben dem "klassischen" Client/Server wurde OPC UA um einen Publisher/Subscriber-Mechanismus (OPC UA Pub/Sub, OPC UA Part 14) erweitert. OPC UA Pub/Sub, insbesondere im Umfeld Industrie 4.0 sowie im Industrial Internet of Things (IIOT) als das zentrale Kommunikationsprotokoll für M2M betrachtet. Neben OPC UA Pub/Sub existieren vergleichbare Kommunikationsprotokolle wie z.B. das Advanced Message Queuing Protocol (AMQP) und Message Queue Telemetry Transport (MQTT). Diese Protokolle haben alle gemein, dass sie einen Publisher/Subscriber-Mechanismus jedoch in unterschiedlichen Ausprägungen (z.B. Broker-basiert oder brokerless) umsetzen.

In einer industriellen Fertigung hat sich ein "Service-Gedanke" etabliert. Daher umfasst eine Fertigungsanlage in der Regel mehrere Maschinen unterschiedlicher Hersteller und Betreiber, welche Dienstleistungen gegeneinander je nach Ausnutzung der Maschinen abrechnen. Dieser Ansatz ermöglicht auch eine Vermietung einer Anlage oder eines Anlagenteils an unterschiedliche Betreiber (z.B. Zulieferer), die in derselben Anlage und auf denselben Maschinen zeitgleich ihre Produkte fertigen. Basis hierfür bildet die auf der oben dargestellten M2M-Kommunikation basierende, selbstständige Koordination der Maschinen, um die Fertigung entsprechend des zu produzierenden Gegenstandes zu steuern. Dieser Ansatz vereinfacht die Abrechnung bei der Produktion von individuellen Einzelstücken (Stichwort Los Größe 1). Heute erfolgt ein Abrechnungsprozess zentral, z.B. durch ein MES-System. Ein derartiges MES-System (Manufactor Execution System) umfasst die Aufgaben Systemverwaltung, Arbeitsverlauf, Produktionslogistik, Materialverwaltung, Daten zu Maschinen, Qualitätssicherung und Reparatur und Wartung. Insbesondere bei dem Arbeitsgebiet Daten zu Maschinen werden Verbindungen zu Maschinen aufgebaut, Lesen der Arbeitsdaten der Maschinen, Lesen der Daten zu Materialverbrauch, Berechnung von Performance Indikatoren und Alarmmodule. Hier wird im Sinne der Erfindung angesetzt.

Es ist Aufgabe der vorliegenden Erfindung eine Abrechnung zwischen zwei Maschinen zu vereinfachen, beschleunigen und zu flexibilisieren.

Die Aufgabe wird bei dem eingangs genannten Verfahren dadurch gelöst, dass der Quell-Dienst um ein Datenelement erweitert wird, welches den zu zahlenden Betrag für die Inanspruchnahme des Quell-Dienstes repräsentiert, wobei das Datenelement in der Gruppe von dem Senke-Datendienst sichtbar ist, wobei in einem weiteren Schritt der Quell-Dienst mit einem Schlüssel verschlüsselt wird, wobei der Schlüssel durch einen Schlüssel-Server verwaltet wird, und bei Anforderung des Schlüssels von dem Schlüssel-Server durch den Senke-Datendienst der Senke-Datendienst den zu zahlenden Betrag für den Quell-Dienst akzeptiert, und wobei durch die Akzeptierung des zu zahlenden Betrages eine Information generiert wird, welche zur Abrechnung an ein Abrechnungssystem weiter geleitet wird. Als Abrechnungssystem kann ein bereits vorhandenes MES-System genutzt werden. Mit Hilfe der Erfindung wird die Abrechnung nun bilateral zwischen zwei Maschinen bzw. zwischen zwei Fertigungsmodulen erfolgen. Dies vereinfacht, beschleunigt und flexibilisiert einen Abrechnungsprozess zwischen einem Anlagenbetreiber und einen Zulieferer.

Eine weitere Ausgestaltung sieht vor, dass der Quell-Datendienst und der Senke-Datendienst mittels eines industriellen Kommunikationsprotokolls gemäß den UPC-UA-Standard kommunizieren und als Schlüssel die Sicherheitsmechanismen gemäß OPC-UA-Standard genutzt werden. Bei dem Verfahren umfasst der Quell-Dienst ein Dataset. Ein Dataset gemäß der Erfindung bezeichnet eine größere, zusammenhängende Datenmenge, die abhängig von einem Computer- und/oder Entwicklungs- und/oder Automatisierungsumfeld unterschiedliche Bedeutung hat. Vorteilhafterweise können nun anhand des Datasets dataset-granulare oder metadaten-granulare Abrechnungen erfolgen. Nun hat man ein vorteilhaftes Verfahren um über einen Quell-Dienst ein Dataset kostenpflichtig für andere Senke-Datendienste anbieten zu können. Die Idee der Erfindung basiert auf der direkten Erweiterung von OPC UA Pub/Sub um abrechenbare Datensets, um zukünftig eine bessere und/oder fein-granulare Abrechnungen zwischen zwei Fertigungsmodulen zu ermöglichen. Dies ermöglicht den Fertigungsmodulen, Datasets je nach angeforderter Qualität (z.B. hohes Publisher and Intervall) entsprechend zu bepreisen und abzurechnen. Dies ermöglicht die Abrechnung von Produktions- und Prozessdaten (Stichwort: digitaler Zwilling), die unter Umständen zur Diagnose und der Qualitätsüberwachung an eine Cloud geliefert werden.

Auch ist eine zeitabhängige Abrechnung anhand der bei OPC UA veränderbaren Schlüssel durchführbar, wobei für einen bestimmten Zeitraum der Quell-Datendienst ein Applikations-Instanz-Zertifikat bereitstellt. Nun ist beispielsweise eine Abrechnung nach der Art Preis für ein Dataset pro Stunde möglich.

Ein Verfahrensschritt sieht vor, dass bei einer Einrichtung einer Sicherheits-Gruppe in der Gruppe der zu zahlende Betrag von dem Quell-Datendienst festgelegt wird und an den Schlüsselserver übertragen wird. D.h. bei einer Einrichtung der notwendigen Security-Gruppe wird der Preis für die zugehörigen Datasets vom Publisher festgelegt und an den SKS-Server übertragen.

Die Umsetzung der erfindungsgemäßen Idee kann wie folgt durchgeführt werden:
1. Ein Publisher (erstes Fertigungsmodul bzw. der Quell-Datendienst) veröffentlicht in einer Metadaten-Multicastgruppe zyklisch eine Konfiguration seiner vorhandenen Datasets. Diese Konfiguration wird nun um einen optionalen Parameter, der den Preis der Datasets spezifiziert, erweitert. Ist dieser neue Parameter nicht vorhanden (Stand der Technik) bedeutet dies, dass das Dataset kostenfrei von Subscribern (zweites Fertigungsmodul bzw. Senke-Datendienst) konsumiert werden kann. Bei zu bezahlenden Datasets sieht die Erfindung die Verschlüsselung des Datasets mit einem für die Datasets eigenen Schlüssel vor. Schlüssel werden von dem Security Key Service (SKS) verwaltet. Der SKS kann in einem Global Discovery Service (GDS) implementiert sein. Bei der Einrichtung der notwendigen Security-Gruppe wird der Preis für die zugehörigen Datasets vom Publisher festgelegt und an den SKS übertragen.
2. Subscriber (Senke-Datendienste), die Interesse an einem Dataset von einem Publisher haben, benötigen zur Entschlüsselung dieser Datasets zunächst das Schlüsselmaterial, welches der SKS verwaltet. Fordert des Subscriber dieses Schlüsselmaterial vom SKS an, akzeptiert er hiermit den in der Metadaten-Multicastgruppe veröffentlichten Preis für dieses Dataset. Der SKS kann diese Information an ein MES-System zur Abrechnung weiter reichen. Der SKS kann die Abrechnung zwischen den Maschinen bzw. den Fertigungsmodulen auch direkt übernehmen und nur die resultierenden Differenzen (z.B. monatlich) an das MES-System weiterleiten. Eine Bezahlung könnte auch z.B. mittels einer Kryptowährung wie die Blockchain-basierte Währung oder die IOTA Währung Bitcoin durchgeführt werden. Der Subscriber kann nun, wie gewohnt, der entsprechenden Metadaten-Multicast-Gruppe beitreten und mit Hilfe des "gekauften" Schlüsselmaterials kann der Subscriber die Nachricht und das entsprechende Dataset entschlüsseln und verarbeiten. OPC-UA Server können sich über sogenannte Software- und Applikationsinstanz-Zertifikate identifizieren. Mit Hilfe von Software-Zertifikate ist es möglich, bestimmten Clientanwendungen einen erweiterten Zugriff auf Informationen eines OPC UA Server zu geben, beispielsweise für das Engineering eines OPC UA-Servers. Auch ist es möglich OPC Clients einen zeitlich eingeschränkten Zugriff auf Daten zu geben. Durch Applikations- und Instanz-Zertifikate kann sichergestellt werden, dass ein OPC UA Server nur mit vorkonfigurierten Clients kommuniziert. Eine Berücksichtigung dieser Zertifikate ist optional, d.h. ein OPC UA Server kann auch jeden Client den gleichen Zugriff, abhängig von den Nutzungsrechten, geben.

Vorrichtungsgemäß wird die eingangs genannte Aufgabe durch ein Fertigungsverbund zur Fertigung eines Produktes mit einem ersten Fertigungsmodul und einem zweiten Fertigungsmodul, wobei im ersten Fertigungsmodul ein Quell-Datendienst implementiert ist und dieser einen Quell-Dienst bereitstellt, welcher von einem in dem zweiten Fertigungsmodul implementierten Senke-Datendienst in Anspruch genommen wird, dabei ist der Quell-Datendienst ausgestaltet, seinen Quell-Dienst in einer Gruppe bekannt zu machen und der Senke-Datendienst ist ausgestaltet, den in der Gruppe angebotenen Quell-Dienst zu nutzen, dadurch gelöst, dass der Quell-Dienst ein Datenelement aufweist, welches einen zu zahlenden Betrag für die Inanspruchnahme des Quell-Dienstes repräsentiert, wobei das Datenelement in der Gruppe von dem Senke-Datendienst sichtbar ist, dass der Quell-Dienst mit einem Schlüssel verschlüsselt ist, dass der Schlüssel in einen Schlüsselserver abgelegt ist das ein Verwaltungsmittel ausgestaltet ist eine Information zu generieren, wenn durch die Anforderung des Schlüssels von dem Schlüsselserver durch den Senke-Datendienst, der Senke-Datendienst den zu zahlenden Betrag für den Quell-Dienst akzeptiert, weiterhin ist das Verwaltungsmittel ausgestaltet, die Information zur Abrechnung an ein Abrechnungssystem weiter zu leiten.

Besonders vorteilhaft ist es, wenn für eine Kommunikation zwischen den Fertigungsmodulen der Quell-Datendienst einen Kommunikations-Stack aufweist, welcher nach den Kommunikationsprotokoll gemäß dem OPC-UA-Standard als OPC-UA Publisher arbeitet und der Senke-Datendienst einen Kommunikations-Stack aufweist, welcher nach dem Kommunikationsprotokoll gemäß dem OPC-UA-Standard als OPC-UA Subscriber arbeitet.

Vereinfachen lässt sich eine Implementierung des Verfahrens, wenn der Schlüsselserver in einem zentralen OPC-UA-Server implementiert ist. So ein zentraler OPC-UA-Server könnte einen Global Directory Service (GDS) widerspiegeln. Ein derartiger zentraler, eigenständiger OPC-UA-Server weist dann Methoden zur Verzeichnisverwaltung auf. Andere OPC-UA-Server können sich bei diesen Service (GDS) registrieren und wiederum andere OPC-UA-Clients können Listen von Servern aufrufen und durchsuchen. Der GDS kann wiederum mittels MDNS im Subnetz bekannt gemacht werden oder ist mit global verfügbaren und bekannten URLS zu erreichen. Ein GDS ermöglicht das netzwerkweite Auffinden von OPC-UA-Servern, während mittels mDNS schnell ein Ad-Hoc-Discovery Konzept in einem lokalen Subnetz realisierbar ist.

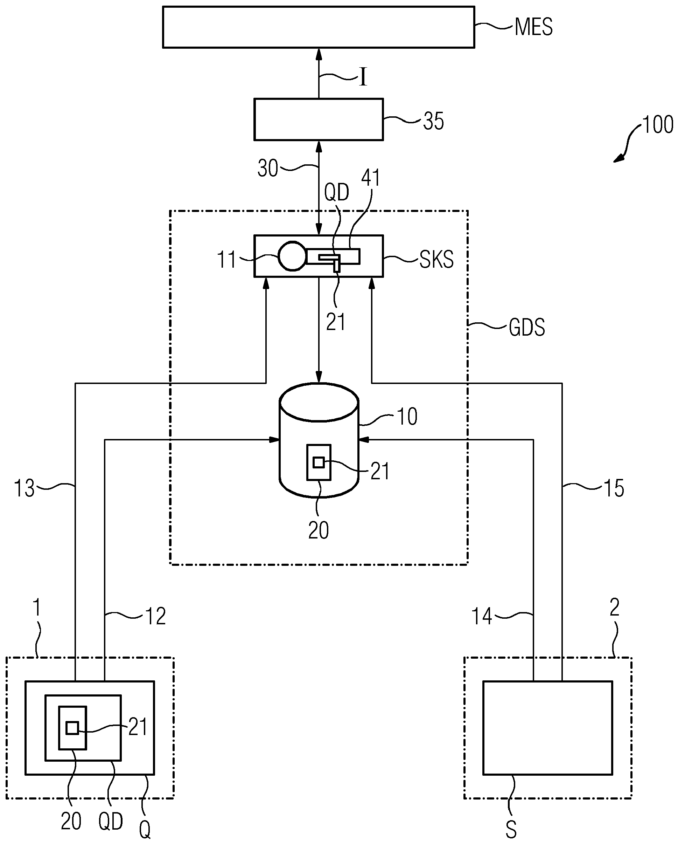

Die Zeichnung zeigt ein Ausführungsbeispiel der Erfindung.

Die Figur zeigt stark schematisiert eine mögliche Anordnung und Kommunikation zwischen zwei Fertigungsmodulen zur Abrechnung.

Gemäß der Figur ist ein Fertigungsverbund 100 zur Fertigung eines Produktes mit Hilfe eines ersten Fertigungsmoduls 1 und eines zweiten Fertigungsmoduls 2 dargestellt. Im ersten Fertigungsmodul 1 ist ein Quell-Datendienst Q implementiert. Der Quell-Datendienst Q wiederum stellt einen Quell-Dienst QD bereit. Der bereitgestellte Quell-Dienst QD kann von dem zweiten Fertigungsmodul 2 mit Hilfe eines implementierten Senke-Datendienstes S in Anspruch genommen werden. Für eine Kommunikation mittels OPC UA Publisher/Subscriber ist der Quell-Datendienst Q ausgestaltet, seinen Quell-Dienst QD in einer Gruppe 10 bekannt zu machen. Der Senke-Datendienst S ist dazu ausgestaltet den in der Gruppe 10 angebotenen Quell-Dienst QD zu nutzen.

Das erste Fertigungsmodul 1 stellt nun für das zweite Fertigungsmodul 2 gewisse Daten bereit, welche das zweite Fertigungsmodul 2 zur Fertigung oder Weiterverarbeitung eines Produktes benötigt. Da beispielsweise das Fertigungsmodul 1 von der Firma X und das Fertigungsmodul 2 von der Firma Y ist, können das Bereitstellen der Daten für das Fertigungsmodul 2 um das Produkt letztendlich zu fertigen, abgerechnet werden. Hierzu weist der Quell-Dienst QD ein Datenelement 21 auf, welches einen zu zahlenden Betrag für die Inanspruchnahme des Quell-Dienstes QD repräsentiert, wobei das Datenelement 21 in der Gruppe 10 von dem Senke-Datendienst S sichtbar ist. Der Quell-Datendienst QD ist mit einem Schlüssel 30 verschlüsselt. Der Schlüssel 30 ist in einem Schlüsselserver SKS abgelegt. Ein Verwaltungsmittel 35 ist ausgestaltet, eine Information I zu generieren, wenn durch eine Anforderung 15 des Schlüssels 30 von dem Schlüsselserver SKS durch den Senke-Datendienst S, der Senke-Datendienst S den zu zahlenden Betrag für den Quell-Dienst QD akzeptiert.

Das Verwaltungsmittel 35 ist dabei weiterhin ausgestaltet die Information I zur Abrechnung an ein Abrechnungssystem MES weiter zu geben. Für die Kommunikation zwischen dem ersten Fertigungsmodul 1 und dem zweiten Fertigungsmodul 2 und den Servern wird die OPC UA Pub/Sub Kommunikationsart nach dem OPC-UA-Standard Teil 14 genutzt. Mit der OPC UA Pub/Sub Kommunikation kann ein Dataset 20 herkömmlich kommuniziert werden, erfindungsgemäß ist aber nun das Dataset 20 um ein Datenelement 21 erweitert worden, welches einen zu zahlenden Betrag für die Inanspruchnahme des Quell-Dienstes QD repräsentiert. Der Quell-Datendienst Q und der Senke-Datendienst S nutzen demnach das industrielle Kommunikationsprotokoll gemäß dem OPC-UA-Standard und als Schlüssel 30 werden die Sicherheitsmechanismen gemäß OPC-UA-Standard genutzt. Der Quell-Datendienst Q macht sein Dataset 20 in einer Gruppe 10, beispielsweise einer Metadaten-Multicastgruppe, bekannt. In einem weiteren Schritt wird eine Einrichtungsanweisung 13 zum Einrichten einer Sicherheitsgruppe an den Schlüsselserver SKS vom Quell-Datendienst Q gesendet. Der Schlüsselserver SKS enthält nun eine Sicherheitsgruppe 11, wobei ein Schlüssel 30 den Quell-Dienst QD verschlüsselt hat, nur das zusätzlich eingeführte Datenelement 21, welches den Preis für das Dataset 20 repräsentiert, ist sichtbar. Das zweite Fertigungsmodul 2 kann mit seinem Senke-Datendienst S über eine Abfrage 4 des Datasets 20 bzw. den zugehörigen Preis über das Datenelement 21 in der Gruppe 10 erfragen. Will es zu dem angebotenen Preis das Dataset nutzen, so schickt das zweite Fertigungsmodul 2 über seinen Senke-Datendienst S eine Anforderung 15 an das zugehörige Schlüsselmaterial an den Schlüsselserver SKS. Mit der Anforderung des Schlüsselmaterials erklärt sich das zweite Fertigungsmodul 2 bereit den veröffentlichten Preis zu zahlen und erhält damit zur Entschlüsselung des Datasets 20 den Schlüssel 30. Nun kann das Verwaltungsmittel 35, welches mit dem Schlüsselserver SKS in Verbindung steht, dieses anfordern beobachten und eine Information I bereitstellen, welche in dem Abrechnungssystem MES zum Verrechnen der Transaktionen die zwischen dem ersten Fertigungsmodul 1 und dem zweiten Fertigungsmodul 2 erfolgt sind, nutzen.

## Patentansprüche

1. Verfahren zur Abrechnung von Dienstleistungen zwischen industriellen Fertigungsmodulen, wobei in einem ersten Fertigungsmodul (1) durch ein in einem Quell-Datendienst (Q) bereitgestellter Quell-Dienst (QD) von einem in einem zweiten Fertigungsmodul (2) vorhandenen Senke-Datendienst (S) in Anspruch genommen wird, mit den Schritten:
der Quell-Datendienst (Q) macht seinen Quell-Dienst (QD) in einer Gruppe (10) bekannt,
der Senke-Datendienst (S) fragt in der Gruppe (10) den Quell-Dienst (QD) an,
**dadurch gekennzeichnet, dass**
- der Quell-Dienst (QD) um ein Datenelement (21) erweitert wird, welches den zu zahlenden Betrag für die Inanspruchnahme des Quell-Dienstes (QD) repräsentiert, wobei das Datenelement (20) in der Gruppe (10) von dem Senke-Datendienst (S) sichtbar ist,
- der Quell-Dienst (QD) mit einem Schlüssel (30) verschlüsselt wird,
- der Schlüssel (30) durch einen Schlüsselserver (SKS) verwaltet wird,
- bei Anforderung des Schlüssels (30) von dem Schlüsselserver (SKS) durch den Senke-Datendienst (S), der Senke-Datendienst (S) den zu zahlenden Betrag für den Quell-Dienst (QD) akzeptiert,
- durch die Akzeptierung des zu zahlenden Betrages eine Information (I) generiert wird, welche zur Abrechnung an ein Abrechnungssystem (40) weitergeleitet wird.

2. Verfahren nach Anspruch 1, wobei der Quell-Datendienst (Q) und der Senke-Datendienst (S) mittels eines industriellen Kommunikationsprotokolls gemäß dem OPC-UA-Standard kommunizieren und als Schlüssel (30) die Sicherheitsmechanismen gemäß OPC-UA-Standard genutzt werden.

3. Verfahren nach einem der Ansprüche 1 oder 2, wobei der Quell-Dienst (QD) ein Dataset (20) umfasst.

4. Verfahren nach einem der Ansprüche 1 bis 3, wobei eine zeitabhängige Abrechnung anhand der bei OPC UA veränderbaren Schlüssel (30) durchgeführt wird, wobei für einen bestimmten Zeitraum der Quell-Datendienst (Q) ein Applikationsinstanz-Zertifikat (31) bereitstellt.

5. Verfahren nach einem der Ansprüche 1 bis 4, wobei bei einer Einrichtung einer Sicherheits-Gruppe (11) in der Gruppe (10) der zu zahlende Betrag von dem Quell-Datendienst (Q) festgelegt wird und an den Schlüsselserver (SKS) übertragen wird.

6. Fertigungsverbund (100) zur Fertigung eines Produktes mit einem ersten Fertigungsmodul (1) und einem zweiten Fertigungsmodul (2), wobei im ersten Fertigungsmodul (1) ein Quell-Datendienst (Q) implementiert ist und dieser einen Quell-Dienst (QD) bereitstellt, welcher von einem in dem zweiten Fertigungsmodul (2) implementierten Senke-Datendienst (S) in Anspruch genommen wird, dabei ist der Quell-Datendienst (Q) ausgestaltet seinen Quell-Dienst (QD) in einer Gruppe (10) bekannt zu machen und der Senke-Datendienst (S) ist ausgestaltet den in der Gruppe (10) angebotenen Quell-Dienst (QD) zu nutzen,
**dadurch gekennzeichnet, dass**
- der Quell-Dienst (QD) ein Datenelement (21) aufweist, welches einen zu zahlenden Betrag für die Inanspruchnahme des Quell-Dienstes (QD) repräsentiert, wobei das Datenelement (21) in der Gruppe (10) von dem Senke-Datendienst (S) sichtbar ist,
- der Quell-Dienst (QD) mit einem Schlüssel (30) verschlüsselt ist,
- der Schlüssel (30) in einem Schlüsselserver (SKS) abgelegt ist,
- ein Verwaltungsmittel (35) ausgestaltet ist, eine Information (I) zu generieren, wenn durch die Anforderung des Schlüssels (30) von dem Schlüsselserver (SKS) durch den Senke-Datendienst (S), der Senke-Datendienst (S) den zu zahlenden Betrag für den Quell-Dienst (QD) akzeptiert,
- weiterhin ist das Verwaltungsmittel (35) ausgestaltet, die Information zur Abrechnung an ein Abrechnungssystem (MES) weiter zu leiten.

7. Fertigungsverbund nach Anspruch 6, wobei für eine Kommunikation zwischen den Fertigungsmodulen (1,2)
- der Quell-Datendienst (Q) einen Kommunikations-Stack aufweist, welcher nach dem Kommunikationsprotokoll gemäß dem OPC-UA-Standard als OPC-UA Publisher arbeitet und
- der Senke-Datendienst (S) einen Kommunikations-Stack aufweist, welcher nach dem Kommunikationsprotokoll gemäß dem OPC-UA-Standard als OPC-UA Subscriber arbeitet.

8. Fertigungsverbund nach Anspruch 6 oder 7, wobei der Schlüsselserver (SKS) in einem zentralen OPC-UA-Server (GDS) implementiert ist.
